# EUROPEAN PATENT APPLICATION

(11) **EP 4 372 678 A1**
(43) Date of publication of application: **22.05.2024**
(21) Application number: 22841716.8
(22) Date of filing: 17.03.2022
(51) Int. Cl.: G06T 7/00, G06T 7/70, G06F 1/16, H05K 5/02, H04M 1/12, G06F 3/01

(54) **INFORMATION PROCESSING DEVICE, INFORMATION PROCESSING METHOD, AND RECORDING MEDIUM**

(30) Priority: 13.07.2021 JP 2021115787
(71) Applicant: Sony Group Corporation, Tokyo 108-0075 (JP)
(72) Inventor: IWAFUNE, Miyu, Tokyo 108-0075 (JP); SHIMIZU, Junichi, Tokyo 108-0075 (JP)
(74) Representative: D Young & Co LLP
(86) International application number: PCT/JP2022/012407
(87) International publication number: WO 2023/286366

(57) **Abstract**

An information processing apparatus according to the present technology includes a control unit that obtains recognition information related to use of a target object to which a deformable portion that is at least either stretchable or bendable is attached, and that performs deformation control of the deformable portion on the basis of the obtained recognition information.

## Description

### TECHNICAL FIELD

The present technology relates to an information processing apparatus, a method thereof, and a recording medium that records a program, and particularly relates to a control technique for a deformable portion that is attached to a target object, such as a portable electronic device, and is at least either stretchable or bendable.

### BACKGROUND ART

Patent Document 1 set out below discloses an invention of a portable electronic terminal holding tool that may be adhered to a back surface of a portable electronic terminal, such as a smartphone, and suppresses falling of the portable electronic terminal when the portable electronic terminal is used.

### CITATION LIST

### PATENT DOCUMENT

Patent Document 1: Japanese Patent Application Laid-Open No. 2020-174357

### SUMMARY OF THE INVENTION

### PROBLEMS TO BE SOLVED BY THE INVENTION

While the portable electronic terminal holding tool disclosed in Patent Document 1 is deformable between housed and extended states, this deformation is carried out by a user him/herself applying an external force to the portable electronic terminal holding tool in consideration of usage conditions of the portable electronic terminal, and is not carried out automatically.

An object of the present technology is to improve usability of a target object by performing appropriate deformation control based on usage conditions of the target object or the like on a deformable portion that is attached to the target object, such as a portable electronic device, and is at least either stretchable or bendable.

### SOLUTIONS TO PROBLEMS

An information processing apparatus according to the present technology includes a control unit that obtains recognition information related to use of a target object to which a deformable portion that is at least either stretchable or bendable is attached, and that performs deformation control of the deformable portion on the basis of the obtained recognition information.

The target object referred to here may be, for example, an object as an electronic device such as a smartphone, or may be an object as a non-electronic device such as a book or a mirror. Furthermore, the expression "target device to which a deformable portion is attached" may include a case were the deformable portion is integrally attached to the target object, that is, a case where the target object and the deformable portion are integrally configurated.

In the configuration described above, the deformable portion may be stretchable and deformable, or may be bendable and deformable. In a case where the deformable portion is made stretchable and deformable, the deformable portion in an extended state may function as a support portion that supports the target object to maintain the target object in a self-standing state, and since the length may change according to the stretching at the time of functioning as a support portion in this manner, an inclination angle of the target object in the self-standing state may be adjusted. Moreover, it becomes possible to be in a contracted state to cope with a non-used state of the target object, and to be unobtrusive when the target object is not used.

Furthermore, in a case where the deformable portion is made bendable and deformable, it may function as a locking portion with respect to a hand of a user or another object, and it becomes possible to assist the user not to drop the target object when the user grips the target object, or to allow the user to use the target object in a hands-free state by locking the target object to another object even if the user does not hold the target object in the hand.

An information processing method according to the present technology is an information processing method that causes an information processing apparatus to obtain recognition information related to use of a target object to which a deformable portion that is at least either stretchable or bendable is attached, and to perform deformation control of the deformable portion on the basis of the obtained recognition information.

Furthermore, a recording medium according to the present technology is a recording medium recording a program that is readable by a computer device and causes the computer device to implement a function of obtaining recognition information related to use of a target object to which a deformable portion that is at least either stretchable or bendable is attached and performing deformation control of the deformable portion on the basis of the obtained recognition information.

According to those information processing method and recording medium, the information processing apparatus according to the present technology described above may be achieved.

### BRIEF DESCRIPTION OF DRAWINGS

Fig. 1 is a perspective view of an information processing apparatus and a cover device according to an embodiment.
Fig. 2 is a side view of a mounting body in which the cover device is attached to the information processing apparatus as the embodiment.
Fig. 3 is a perspective view of a deformable portion according to the embodiment.
Fig. 4 is a side view of the deformable portion according to the embodiment.
Fig. 5 is an explanatory diagram of a shape change of the deformable portion according to the embodiment.
Fig. 6 is a block diagram illustrating an internal configuration example of the information processing apparatus as the embodiment.
Fig. 7 is a block diagram illustrating an internal configuration example of the cover device according to the embodiment.
Fig. 8 is an explanatory diagram of a state where the information processing apparatus according to the embodiment is placed on a placement surface.
Fig. 9 is a diagram exemplifying a grip state the information processing apparatus corresponding to a first exemplary method according to the embodiment.
Fig. 10 is a diagram illustrating an example of bending deformation for locking the deformable portion to a hand of a user.
Fig. 11 is a flowchart illustrating a specific example of a processing procedure for achieving a control method as the first exemplary method.
Fig. 12 is a diagram exemplifying a state at a time of locking the deformable portion to a support body.
Fig. 13 is a flowchart illustrating a specific example of a processing procedure to be executed to cope with a first case of a second exemplary method.
Fig. 14 is a flowchart illustrating a specific example of a processing procedure to be executed to cope with a second case of the second exemplary method.
Fig. 15 is an explanatory diagram of a self-standing function of the information processing apparatus implemented by the deformable portion.
Fig. 16 is a flowchart illustrating a specific example of a processing procedure to be executed to achieve a control method as a third exemplary method.
Fig. 17 is an explanatory diagram of another example inclination angle adjustment.
Fig. 18 is an explanatory diagram of still another example of the inclination angle adjustment.
Fig. 19 is a flowchart illustrating a specific example of a processing procedure to be executed to achieve the inclination angle adjustment as another example.
Fig. 20 is an explanatory diagram of an example in which the deformable portion is used for various types of information notification.
Fig. 21 is an explanatory diagram of another example in which the deformable portion is used for various types of information notification.
Fig. 22 is an explanatory diagram of inclination angle adjustment as a variation.

### MODE FOR CARRYING OUT THE INVENTION

Hereinafter, an embodiment will be described in the following order.
<1. Configuration example of information processing apparatus and deformable portion as embodiment>
<2. Deformable portion control method as embodiment>
(2-1. First exemplary method)
(2-2. Second exemplary method)
(2-3. Third exemplary method)
<4. Variations>
<5. Summary of embodiment>
<6. Present technology>

### <1. Configuration example of information processing apparatus and deformable portion as embodiment>

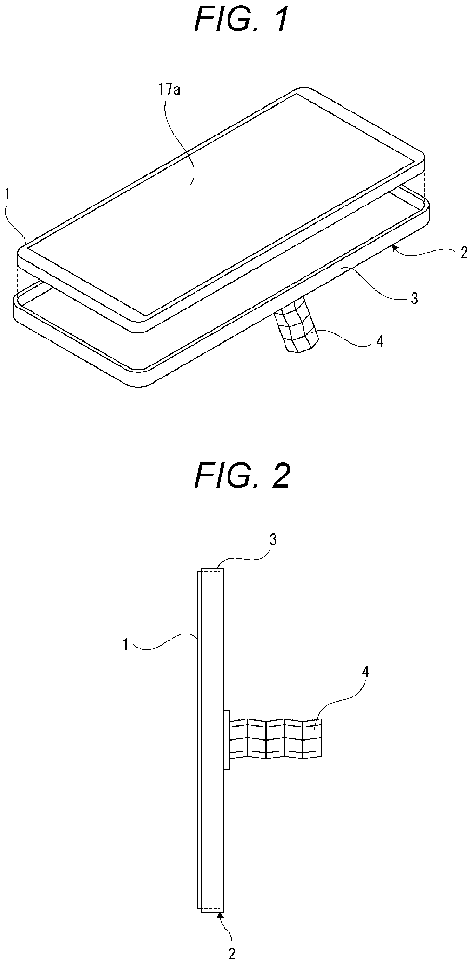

A configuration example of an information processing apparatus 1 as an embodiment according to the present invention and a cover device 2 including a deformable portion 4 as the embodiment will be described with reference to Figs. 1 to 7.

Fig. 1 is a perspective view of the information processing apparatus 1 and the cover device 2, and Fig. 2 is a side view of a mounting body in which the cover device 2 is attached to the information processing apparatus 1.

The information processing apparatus 1 is configured as a portable electronic device, specifically, a smartphone in the present example, which has a substantially tabular outer shape, and a display screen 17a for displaying various types of information is provided on the front surface.

The cover device 2 includes a case portion 3 as a portion to be attached to the information processing apparatus 1, and a deformable portion 4 that is at least either stretchable or bendable. The case portion 3 has a substantially square shape, and is formed as a portion to be attached to the information processing apparatus 1 to cover the back surface and the side surface of the information processing apparatus 1.

The deformable portion 4 has a substantially columnar outer shape, and is provided on the back surface of the case portion 3 to protrude further rearward (in the direction opposite to the side on which the information processing apparatus 1 is attached) from the back surface.

In the present example, the deformable portion 4 is provided substantially at the center in the top-down and right-left directions on the back surface of the case portion 3 (see Fig. 2).

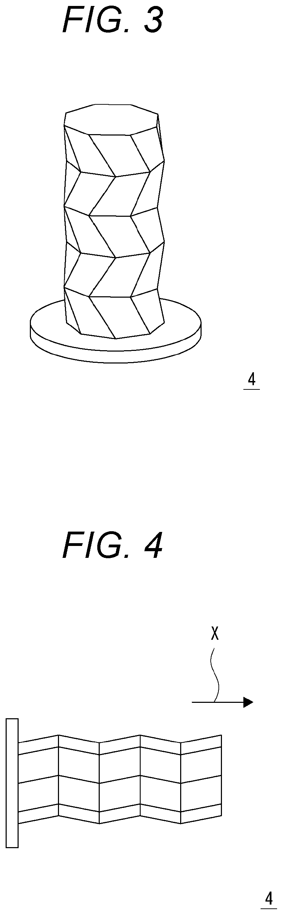

Figs. 3 and 4 are a perspective view and a side view of the deformable portion 4, respectively.

As illustrated in the drawings, the deformable portion 4 in the present example has a substantially octagonal pillar shape, and is biased toward the projection direction side indicated by an arrow X in Fig. 4.

Although illustration is omitted, in the deformable portion 4 in this case, a wire is inserted into each of at least two side surface parts facing each other among the eight side surface parts. One end of each of those wires is fixed on the tip end side of the deformable portion 4.

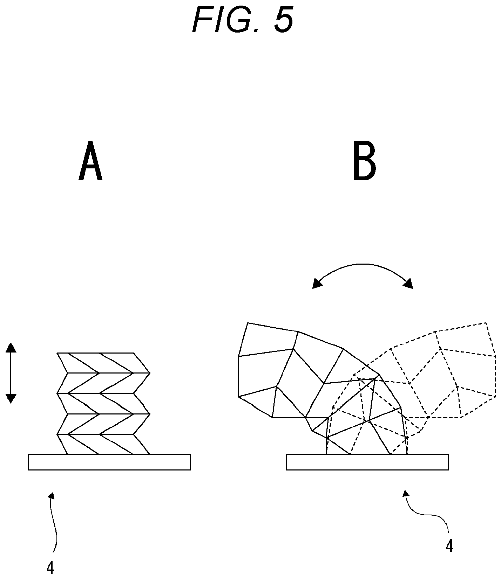

By pulling both of the two wires by the same amount toward the side opposite to the tip end part of the deformable portion 4, the deformable portion 4 may be brought into a contracted state as illustrated in Fig. 5A. At this time, the contraction amount of the deformable portion 4 may be controlled by the amount of pulling of the two wires. Since the deformable portion 4 is biased toward the projection direction X as described above, the deformable portion 4 may be brought into a state of being maximally extended by the amount of pulling of the two wires set to zero.

In this manner, by adjusting the amount of pulling of the two wires, it becomes possible to stretch the deformable portion 4 to a desired length.

Furthermore, by pulling only one of the two wires, it becomes possible to bend the deformable portion 4 as illustrated in Fig. 5B. Specifically, the deformable portion 4 may be bent toward the side surface part on the side of the pulling of the wire. At this time, a degree of bending of the deformable portion 4 may be controlled by adjustment of the amount of pulling of the wire.

Here, a specific configuration for achieving the deformable portion 4 that is stretchable and bendable is not limited to the wire-type configuration exemplified above, and is not limited to a specific configuration so that various configurations may be considered.

For example, it is conceivable to adopt a configuration that is made stretchable and bendable using shape-memory alloy or the like.

Furthermore, a shape of the deformable portion 4 is not limited to the exemplified octagonal pillar shape, and maybe another shape such as a substantially columnar shape.

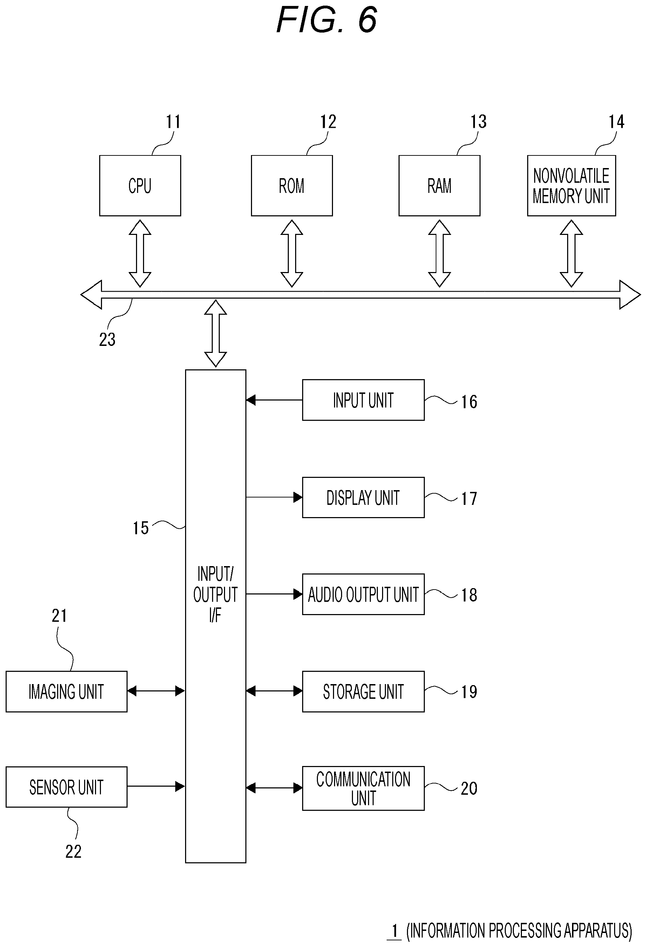

Fig. 6 is a block diagram illustrating an internal configuration example of the information processing apparatus 1.

As illustrated in the drawing, the information processing apparatus 1 includes a central processing unit (CPU) 11, a read only memory (ROM) 12, a random access memory (RAM) 13, and a nonvolatile memory unit 14. The nonvolatile memory unit 14 includes, for example, an electrically erasable programmable read-only memory (EEP-ROM) or the like.

The CPU 11 executes various types of processing according to a program stored in the ROM 12 or the nonvolatile memory unit 14 or a program loaded to the RAM 13 from a storage unit 19 to be described later. The RAM 13 also appropriately stores data and the like necessary for the CPU 11 to execute various types of processing.

The CPU 11, the ROM 12, the RAM 13, and the nonvolatile memory unit 14 are connected to each other via a bus 23. An input/output interface 15 is also connected to the bus 23.

The input/output interface 15 may be connected with an input unit 16 that allows a user to perform an input operation, a display unit 17 including a liquid crystal panel, an organic electroluminescence (EL) panel, or the like, an audio output unit 18 including a speaker or the like, the storage unit 19, a communication unit 20, and the like.

The input unit 16 means an input device to be used by the user who uses the information processing apparatus 1. For example, as the input unit 16, various types of manipulation elements and operation devices such as a keyboard, a mouse, a button, a dial, a touch panel, a touch pad, a remote controller, and the like are assumed. A user operation is detected by the input unit 16, and a signal corresponding to the input operation is interpreted by the CPU 11.

The display unit 17 includes the display screen 17a described above, and displays various types of information on the display screen 17a on the basis of an instruction from the CPU 11. Furthermore, the display unit 17 may display various types of operation menus, icons, messages, and the like, that is, displays as a graphical user interface (GUI), on the basis of the instruction from the CPU 11.

The storage unit 19 includes, for example, a storage medium such as a hard disk drive (HDD) or a solid state memory. The storage unit 19 may store various types of data such as captured image data obtained by an imaging unit 21 to be described later, for example. Furthermore, the storage unit 19 may also be used to store program data for causing the CPU 11 to execute various types of processing.

The communication unit 20 performs communication processing via a network including the Internet, and wired or wireless communication (e.g., near field communication, etc.) with a peripheral device. In particular, the communication unit 20 in the present example is communicable with the cover device 2.

Furthermore, the imaging unit 21 and a sensor unit 22 are connected to the input/output interface 15.

The imaging unit 21 includes, for example, a solid-state imaging element such as a complementary metal oxide semiconductor (CMOS) type or a charge coupled device (CCD) type. In the solid-state imaging element, for example, a plurality of pixels, which has photoelectric conversion elements such as photodiodes, is two-dimensionally arranged. The imaging unit 21 performs, for example, correlated double sampling (CDS) processing, automatic gain control (AGC) processing, or the like on an electrical signal obtained by photoelectric conversion for each pixel, and further performs analog/digital (A/D) conversion processing to obtain captured image data as digital data.

The imaging unit 21 may include a plurality of cameras. In the present example, it is assumed that the cameras included in the imaging unit 21 include an outer camera provided on the back surface side of the information processing apparatus 1 and an inner camera provided on the side opposite to the back surface (i.e., provided on the same surface side as the display screen 17a) .

The sensor unit 22 comprehensively indicates various sensors for detecting actions of the user. In the present example, for example, the sensor unit 22 is provided with a motion sensor for detecting motions of the information processing apparatus 1, such as an acceleration sensor, an angular velocity sensor, and the like.

Moreover, in the present example, the sensor unit 22 is also provided with a pressure sensor for detecting a grip pressure on the information processing apparatus 1 applied by the user, a proximity sensor for detecting an approach of an object to the information processing apparatus 1, and the like.

In the present example, a plurality of pressure sensors is provided so that the grip pressure on each surface of the information processing apparatus 1 may be detected. Specifically, the pressure sensor in the present example is provided on the back surface and the side surface of the information processing apparatus 1.

Note that, while the information processing apparatus 1 is assumed to be gripped in the state where the cover device 2 is attached thereto in the present embodiment, each of the pressure sensors described above may detect the grip pressure on the information processing apparatus 1 in the state where the cover device 2 is attached.

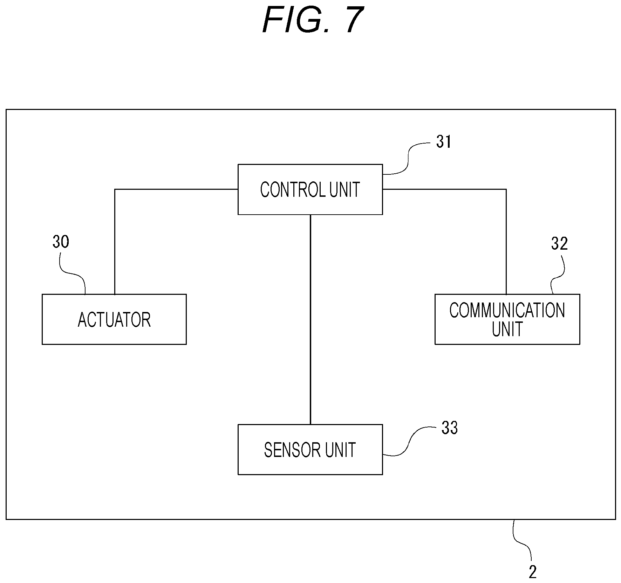

Fig. 7 is a block diagram illustrating an internal configuration example of the cover device 2.

As illustrated in the drawing, the cover device 2 includes an actuator 30, a control unit 31, a communication unit 32, and a sensor unit 33.

The actuator 30 functions as a power source for stretching deformation or bending deformation of the deformable portion 4. The actuator 30 in the present example is capable of pulling the above-described wire in the deformable portion 4 to the side opposite to the tip end side of the deformable portion 4.

The control unit 31 functions as a drive control unit of the actuator 30.

The communication unit 32 capable of performing wired or wireless communication with the information processing apparatus 1 is connected to the control unit 31. The communication unit 32 communicates with the information processing apparatus 1 by, for example, near field communication.

In the present embodiment, the control unit 31 performs drive control of the actuator 30 on the basis of an instruction from the information processing apparatus 1 (CPU 11) issued via the communication unit 32.

Furthermore, the sensor unit 33 is connected to the control unit 31.

The sensor unit 33 includes an external force detection sensor that detects an external force input to the deformable portion 4. The external force detection sensor in the present example includes a pressure sensor provided to be capable of detecting an external force that presses the tip end part of the deformable portion 4, an external force that extends the deformable portion 4, and an external force that contracts the deformable portion 4.

In response to a request from the information processing apparatus 1 (CPU 11), the control unit 31 transmits a detection signal by the external force detection sensor described above to the side of the information processing apparatus 1 via the communication unit 32.

### <2. Deformable portion control method as embodiment>

### (2-1. First exemplary method)

As described above, the deformable portion 4 is bendable and deformable. When the deformable portion 4 is bent and deformed in a state where the user grips the information processing apparatus 1 from the back surface, the deformable portion 4 is locked to the hand (finger) of the user. That is, the deformable portion 4 may be caused to function as a locking portion with respect to the hand of the user, and may assist the information processing apparatus 1 not to easily drop from the hand of the user.

The first exemplary method relates to a function of assisting the information processing apparatus 1 to which the cover device 2 is attached not to easily drop from the hand of the user by bending and deforming the deformable portion 4 in this manner.

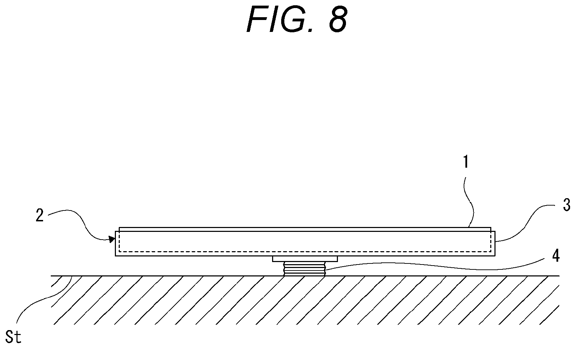

First, it is assumed here that the mounting body in which the cover device 2 is attached to the information processing apparatus 1 is placed on a placement surface St as illustrated in Fig. 8 and the information processing apparatus 1 is in a non-used state (state estimated to be non-used). The placement surface St indicates a substantially horizontal surface on which the mounting body may be placed, such as a surface of a desk or a table.

Here, an event that occurs in the mounting body, such as the mounting body being placed on the placement surface St as described above, may be treated as being synonymous with an event that occurs in the information processing apparatus 1 (since the mounting body is an integrated body obtained by attaching the cover device 2 to the information processing apparatus 1). In view of the above, in the following description, the event that occurs in the mounting body will be treated as occurring in the information processing apparatus 1.

In the present example, in a case where the information processing apparatus 1 is placed on the placement surface St, the deformable portion 4 is assumed to be in a housed state as illustrated in the drawing. The housed state referred to here indicates a state where the deformable portion 4 is contracted at a degree of contraction equal to or greater than a certain degree, such as a state where the deformable portion 4 is most contracted, for example.

With the deformable portion 4 brought into the housed state to cope with the non-used state of the information processing apparatus 1, it becomes possible to make the deformable portion 4 unobtrusive when the information processing apparatus 1 is not used.

Note that this housing function is implemented by control of the CPU 11 of the information processing apparatus 1 as described later.

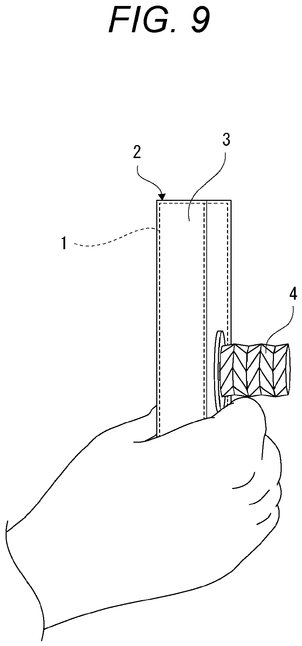

It is assumed that the information processing apparatus 1 is picked up from the non-used state illustrated in Fig. 8 to enter the state of being gripped by the hand of the user from the back surface as illustrated in Fig. 9.

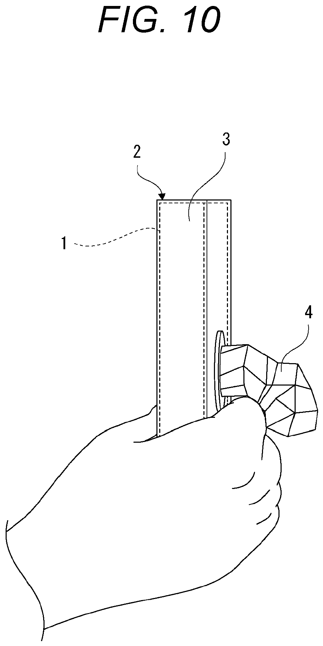

In a case where it is recognized that the information processing apparatus 1 has transitioned from the non-used state to the state of being gripped by the hand of the user from the back surface in this manner, the information processing apparatus 1 bends and deforms the deformable portion 4 as illustrated in Fig. 10. With this arrangement, the deformable portion 4 may be locked to the hand of the user.

Furthermore, the information processing apparatus 1 performs control to increase the bending force of the deformable portion 4 in a case where it is recognized that the information processing apparatus 1 is likely to drop on the basis of the detection signal of the motion sensor in the sensor unit 22 described above in the state where the deformable portion 4 is bent and deformed to be locked to the hand of the user as described above.

With this arrangement, it becomes possible to avoid falling of the information processing apparatus 1 from the hand of the user who grips and uses the information processing apparatus 1.

Moreover, the information processing apparatus 1 performs control to deform the deformable portion 4 to the housed state in a case where a sign of placement on the placement surface St is recognized on the basis of the detection signal of the motion sensor in the sensor unit 22 in the state where the deformable portion 4 is bent and deformed to be locked to the hand of the user.

With this arrangement, it becomes possible to make the deformable portion 4 unobtrusive to cope with the case where the information processing apparatus 1 is placed on the placement surface St.

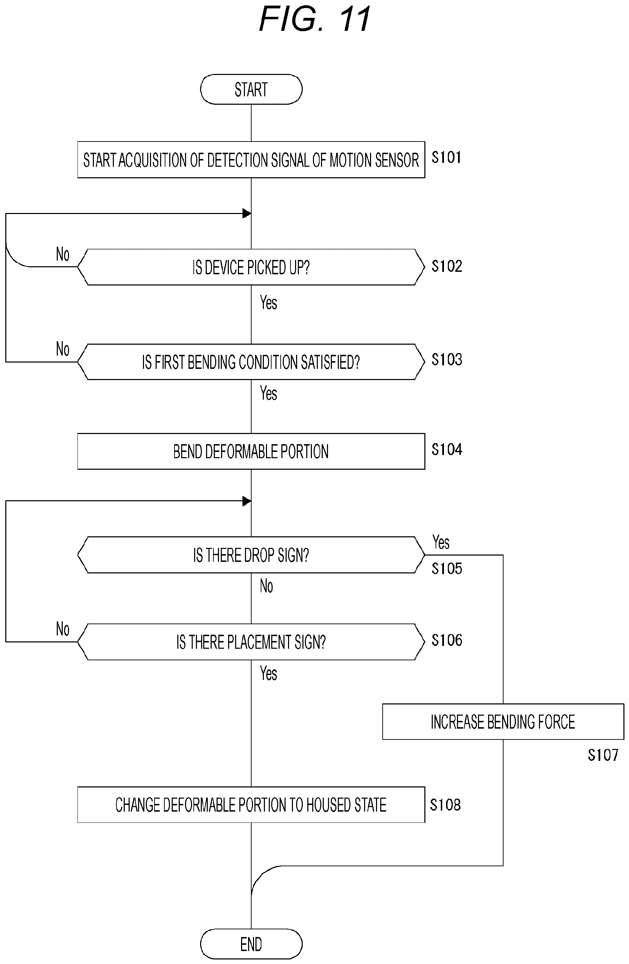

Fig. 11 is a flowchart illustrating a specific example of a processing procedure for achieving a control method as the first exemplary method described above.

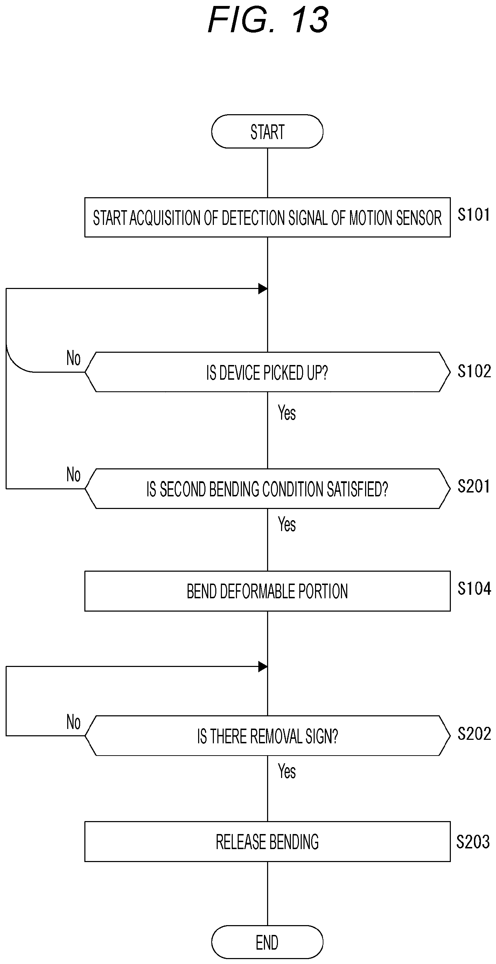

Note that, processes illustrated in, including this Fig. 11, the following Figs. 13, 14, 16, and 19 are executed by the CPU 11 according to a program stored in the ROM 12 or the storage unit 19.

First, it is assumed that the process illustrated in Fig. 11 starts in the state where the information processing apparatus 1 is placed on the placement surface St as exemplified in Fig. 8.

The CPU 11 starts acquisition of the detection signal of the motion sensor in step S101, and determines whether or not the information processing apparatus 1 is picked up in subsequent step S102. Whether or not the information processing apparatus 1 is picked up may be determined on the basis of, for example, a change in an acceleration level.

Note that it is highly likely that the user sandwiches the side surface of the information processing apparatus 1 with at least two fingers at a time of picking up the information processing apparatus 1 from the state illustrated in Fig. 8, and thus it is conceivable to make the picking up determination in step S102 on the basis of the change in the acceleration level and the magnitude of the grip pressure on the side surface of the information processing apparatus 1.

In a case where it is determined in step S102 that the information processing apparatus 1 is not picked up, the CPU 11 performs the processing of step S102 again

On the other hand, in a case where it is determined in step S102 that the information processing apparatus 1 is picked up, the CPU 11 proceeds to step S103, and determines whether or not a first bending condition is satisfied. The first bending condition defines a condition for bending and deforming the deformable portion 4 to lock it to the hand of the user in the state where the information processing apparatus 1 is gripped by the hand of the user from the back surface.

Specifically, as the first bending condition in this case, it may be determined whether or not the gripping force of the back surface or the side surface of the information processing apparatus 1 is equal to or greater than a certain pressure. Information regarding the grip pressure on the back surface or the side surface may be obtained on the basis of a detection signal of the pressure sensor described above in the sensor unit 22.

In a case where it is determined in step S103 that the grip pressure on the back surface or the side surface is not equal to or greater than the certain pressure and that the first bending condition is not satisfied, the CPU 11 returns to step S102.

On the other hand, in a case where it is determined in step S103 that the grip pressure on the back surface or the side surface is equal to or greater than the certain pressure and that the first bending condition is satisfied, the CPU 11 proceeds to step S104, and bends the deformable portion 4.

With this arrangement, it becomes possible to bend and deform the deformable portion 4 to lock it to the hand of the user in the state where the information processing apparatus 1 is gripped by the hand of the user from the back surface.

In step S105 subsequent to step S104, the CPU 11 determines whether or not there is a drop sign. That is, it is determined whether or not the information processing apparatus 1 is likely to drop from the hand of the user.

In the present example, this drop sign determination is made on the basis of information regarding the acceleration level obtained from the detection signal of the motion sensor. Specifically, it is determined that there is a drop sign in a case where a change amount per unit time of the acceleration level of the information processing apparatus 1 is equal to or greater than a threshold Th1, and is determined that there is no drop sign in a case where the change amount is less than the threshold Th1.

In a case where it is determined in step S105 that there is no drop sign, the CPU 11 proceeds to step S106 to determine whether or not there is a placement sign. That is, it is determined whether or not there is a sign for placing the information processing apparatus 1 on the placement surface St.

The determination on the placement sign in step S106 is made on the basis of the information regarding the acceleration level obtained from the detection signal of the motion sensor, in a similar manner to the drop sign determination. Specifically, it is determined whether or not the change amount per unit time of the acceleration level of the information processing apparatus 1 is equal to or greater than a threshold Th2 (here, threshold Th2 < threshold Th1) and less than the threshold Th1. This corresponds to determining whether or not there is a change in the acceleration level equal to or more than a certain level, which is not abrupt than that at the time of the drop sign.

The CPU 11 determines that there is a placement sign in a case where the change amount is equal to or greater than the threshold Th2 and less than the threshold Th1, and determines that there is no placement sign in a case where the change amount does not satisfy the condition of equal to or greater than the threshold Th2 and less than the threshold Th1.

In a case where it is determined in step S106 that there is no placement sign, the CPU 11 returns to step S105. That is, after the bending control in step S104, a loop process of waiting until either the drop sign or the placement sign is present is performed.

In a case where it is determined in step S105 that there is a drop sign, the CPU 11 proceeds to step S107 to perform processing of increasing the bending force, and terminates the series of processing illustrated in Fig. 11.

With this arrangement, it becomes possible to avoid falling of the information processing apparatus 1 from the hand of the user who grips and uses the information processing apparatus 1.

On the other hand, in a case where it is determined in step S106 that there is a placement sign, the CPU 11 proceeds to step S108 to perform processing of causing the deformable portion 4 to be in the housed state.

With this arrangement, it becomes possible to make the deformable portion 4 unobtrusive to cope with the case where the information processing apparatus 1 is placed on the placement surface St.

Note that, while the picking up determination in step S102 may also be referred to as a use start determination from the non-used state, this use start determination may also be made as determination on whether or not a screen operation is performed on the display screen 17a instead of the picking up determination.

Furthermore, while the example of making each of the picking up determination (S102), the drop sign determination (S105), and the placement sign determination (S106) of the information processing apparatus 1 as determination based on the magnitude of the acceleration level has been described above, this is merely an example, and it is also possible to learn a waveform pattern of the acceleration or angular velocity when a motion is made such as the information processing apparatus 1 is picked up, about to drop from the hand, or placed on the placement surface St from a grip state, and determine whether or not there is the corresponding motion on the basis of whether or not the learned waveform pattern matches.

Furthermore, regarding the control related to placement, it is also conceivable to control the deformable portion 4 to be in the housed state on the basis of, for example, an operation input (e.g., operation input of a command to set the information processing apparatus 1 to a sleep state, which may be any of a physical manipulation element, GUI, and voice input) made by the user.

### (2-2. Second exemplary method)

Next, a second exemplary method will be described.

The second exemplary method relates to a locking function for an object other than the hand of the user.

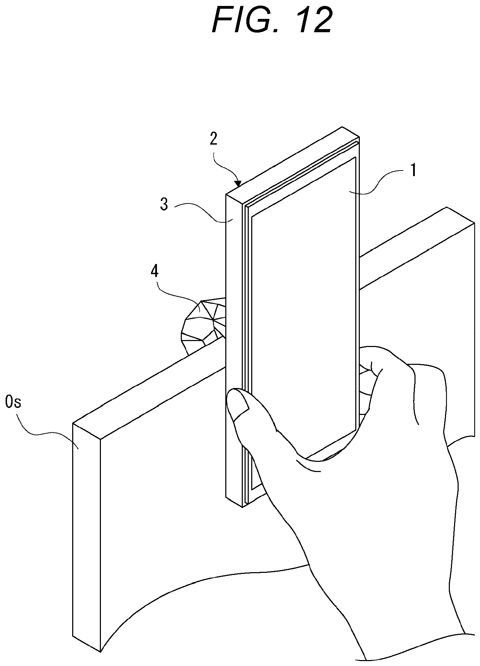

Since the deformable portion 4 is bendable and deformable, the deformable portion 4 may be locked to an object as a support body Os other than the hand of the user, as exemplified in Fig. 12, for example. The user is enabled to view the display screen 17a at an appropriate angle without holding the information processing apparatus 1 in the hand, whereby the information processing apparatus 1 may be used in a hands-free state.

While the support body Os is a tabular object in Fig. 12, an object having a portion to be locked by the deformable portion 4 in a bent state may function as the support body Os.

Two cases are conceivable as the second exemplary method.

One is a case (hereinafter referred to as "first case") where it is desired to use the information processing apparatus 1 in the placed state as illustrated in Fig. 8 mentioned above in the state where the deformable portion 4 is locked to the support body Os as illustrated in Fig. 12.

The other one is a case (hereinafter referred to as "second case") where it is desired to use the information processing apparatus 1 in the state where the deformable portion 4 is locked to the support body Os as illustrated in Fig. 12 from the state where, as described in the first exemplary method, the user grips the information processing apparatus 1 from the back surface (see Fig. 10) .

First, a specific example of the processing procedure to be performed by the CPU 11 to cope with the first case is illustrated in Fig. 13.

Note that, in the following description, the same step numbers will be used for processing similar to the processing that has already been described, and descriptions thereof will be omitted.

In Fig. 13, in this case as well, the CPU 11 starts acquisition of the detection signal of the motion sensor in step S101, and then determines whether or not the information processing apparatus 1 is picked up in step S102.

Then, in a case where it is determined that the information processing apparatus 1 is picked up, the CPU 11 determines whether or not a second bending condition is satisfied in step S201. This second bending condition defines a condition for executing bending deformation of the deformable portion 4 for locking to the support body Os to cope with the first case.

Specifically, here, the condition is that the picked up information processing apparatus 1 is sandwiched by the fingers of the user at its side surface and in a state of being close to the support body Os. Thus, in step S201, the CPU 11 determines whether or not the condition that the grip pressure on the side surface is greater than the grip pressure on the back surface by equal to or more than a certain value and that the proximity to the support body Os within a predetermined distance is detected by the proximity sensor is satisfied as the determination on whether the second bending condition is satisfied.

Note that the second bending condition may be a condition of contact with the support body Os instead of the proximity of the information processing apparatus 1 to the support body Os within the predetermined distance.

In a case where it is determined in step S201 that the second bending condition is not satisfied, the CPU 11 returns to step S102.

On the other hand, in a case where it is determined in step S201 that the second bending condition is satisfied, the CPU 11 proceeds to step S104 to perform processing of bending the deformable portion 4.

With this arrangement, in order to cope with the case where the user desires to pick up the information processing apparatus 1 in the placed state and lock the deformable portion 4 to the support body Os, the deformable portion 4 may be bent and locked to the support body Os, and the information processing apparatus 1 may be used in the hands-free state.

Furthermore, in this case, the CPU 11 advances the process to step S202 in response to the bending of the deformable portion 4 in step S104, and determines whether or not there is a removal sign.

The removal sign referred to here indicates a sign of removing the information processing apparatus 1 used in the state where the deformable portion 4 is locked to the support body Os, that is, the information processing apparatus 1 in the state of being attached to the support body Os, from the support body Os.

In the present example, a condition that the grip pressure on the side surface of the information processing apparatus 1 once decreases by a predetermined value after the bending for locking to the support body Os is carried out and then increases by equal to or more than a certain value is set as the condition of the removal sign, and the CPU 11 determines that there is a removal sign in a case where the condition is satisfied while it determines that there is no removal sign in a case where the condition is not satisfied.

In a case where it is determined that there is no removal sign, the CPU 11 performs the determination processing in step S202 again.

Then, in a case where it is determined that there is a removal sign, the CPU 11 proceeds to step S203 to perform bending release processing. That is, processing of releasing the bending of the deformable portion 4 (bringing it into an upright state) is performed.

By releasing the bending of the deformable portion 4, it becomes possible to remove the information processing apparatus 1 from the support body Os.

The CPU 11 terminates the series of processing illustrated in Fig. 13 in response to the execution of the bending release processing in step S203.

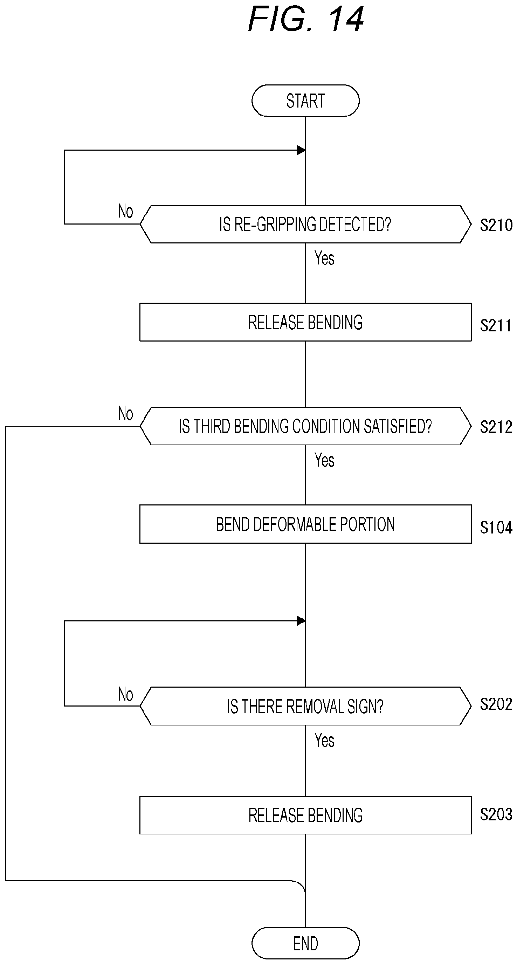

Fig. 14 is a flowchart illustrating a specific example of a processing procedure to be executed by the CPU 11 to cope with the second case.

The CPU 11 in this case waits until re-gripping of the information processing apparatus 1 is detected in step S210.

Here, when the user desires to use the information processing apparatus 1 in the state where the deformable portion 4 is locked to the support body Os as illustrated in Fig. 12 from the state of being gripped from the back surface (see Fig. 10), the user re-grips (changes a holding manner of) the information processing apparatus 1. That is, the side surface of the information processing apparatus 1 is gripped by the hand opposite to the hand gripping the information processing apparatus 1. In step S210, this re-gripping is detected.

Specifically, it is determined whether or not the grip pressure on the side surface of the information processing apparatus 1 has increased to equal to or more than a certain value, and it is determined that the re-gripping is performed in a case where the grip pressure on the side surface has increased to equal to or more than the certain value, and otherwise, it is determined that no re-gripping is performed.

In a case where it is determined in step S210 that the re-gripping is performed, the CPU 11 performs the bending release processing in step S211. With this arrangement, the state in which the deformable portion 4 is locked to the hand gripping the information processing apparatus 1 from the back surface is released, and the deformable portion 4 enters a state capable of being newly locked to the support body Os.

In response to the execution of the bending release processing in step S211, the CPU 11 advances the process to step S212 to determine whether or not a third bending condition is satisfied.

This third bending condition defines a condition for executing bending deformation of the deformable portion 4 for locking to the support body Os to cope with the second case. In the present example, in a similar manner to the second bending condition described above, this third bending condition is defined as a condition that the grip pressure on the side surface of the information processing apparatus 1 is greater than the grip pressure on the back surface by equal to or more than a certain value and that the proximity to the support body Os within a predetermined distance is detected by the proximity sensor.

Note that a condition different from the second bending condition may be defined as the third bending condition.

In a case where it is determined in step S212 that the third bending condition is not satisfied, the CPU 11 terminates the series of processing illustrated in Fig. 14.

On the other hand, in a case where it is determined in step S212 that the third bending condition is satisfied, the CPU 11 bends the deformable portion 4 in step S104.

With this arrangement, it becomes possible to lock the deformable portion 4 to the support body Os to cope with the case where the user desires to use the information processing apparatus 1 in the state where the deformable portion 4 is locked to the support body Os from the state of being gripped from the back surface.

Here, in the second case as well, the processing of waiting for the removal sign in step S202 and the bending release processing in step S203 in the case where there is the removal sign are performed in response to the bending of the deformable portion 4 in step S104, but those have already been described and redundant description is avoided.

Note that it is also conceivable to control the bending of the deformable portion 4 for locking to the support body Os and the bending release of the deformable portion 4 for removal from the support body Os on the basis of, for example, an operation input (e.g., operation input of a command to set the information processing apparatus 1 to a sleep state, which may be any of a physical manipulation element, GUI, and voice input) made by the user.

Furthermore, while the exemplary case where the determination based on the grip pressure is made for the determination on whether or not the user intends to lock the deformable portion 4 to the support body Os (S201, S212) and the determination on the removal sign of the information processing apparatus 1 from the state of being locked to the support body Os (S202) has been described above, this is merely an example, and for example, it is also possible to learn a waveform pattern of acceleration or angular velocity when a motion of the information processing apparatus 1 is made such as the user intends to lock the deformable portion 4 to the support body Os or intends to remove the information processing apparatus 1 from the support body Os, and determine whether or not there is the corresponding motion on the basis of whether or not the learned waveform pattern matches.

### (2-3. Third exemplary method)

A third exemplary method relates to a function of causing the deformable portion 4 to function as a support portion of the information processing apparatus 1 for self-standing of the information processing apparatus 1.

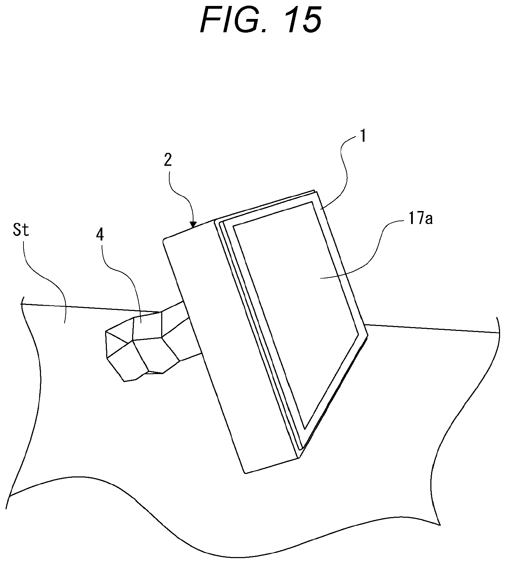

In a state where the deformable portion 4 is extended to some extent, as exemplified in Fig. 15, it is possible to function as a support portion for supporting the information processing apparatus 1, and to cause the information processing apparatus 1 to be maintained in the self-standing state. Furthermore, in a case where the deformable portion 4 functioning as a support portion in this manner is stretched and deformed to change the length, it becomes possible to adjust the inclination angle of the information processing apparatus 1 in the self-standing state.

The third exemplary method relates to those self-standing function and inclination angle adjustment function of the information processing apparatus 1.

The present example exemplifies a case of switching from the state where the user grips the information processing apparatus 1 from the back surface as in Fig. 10 (it is assumed that the deformable portion 4 is bent and locked to the hand of the user at this time) to the use in the self-standing state as in Fig. 15.

Furthermore, in this case, the inclination angle adjustment in the self-standing state is carried out on the basis of a gesture of the user. For example, it is assumed that a gesture by which the user moves the hand upward represents an instruction to increase the inclination angle (i.e., incline the information processing apparatus 1 further upward) and a gesture by which the user moves the hand downward represents an instruction to decrease the inclination angle (i.e., incline the information processing apparatus 1 further downward).

Note that those gestures are merely examples, and are not limited to specific gestures as long as the gestures may be recognized in the image analysis processing on the captured image.

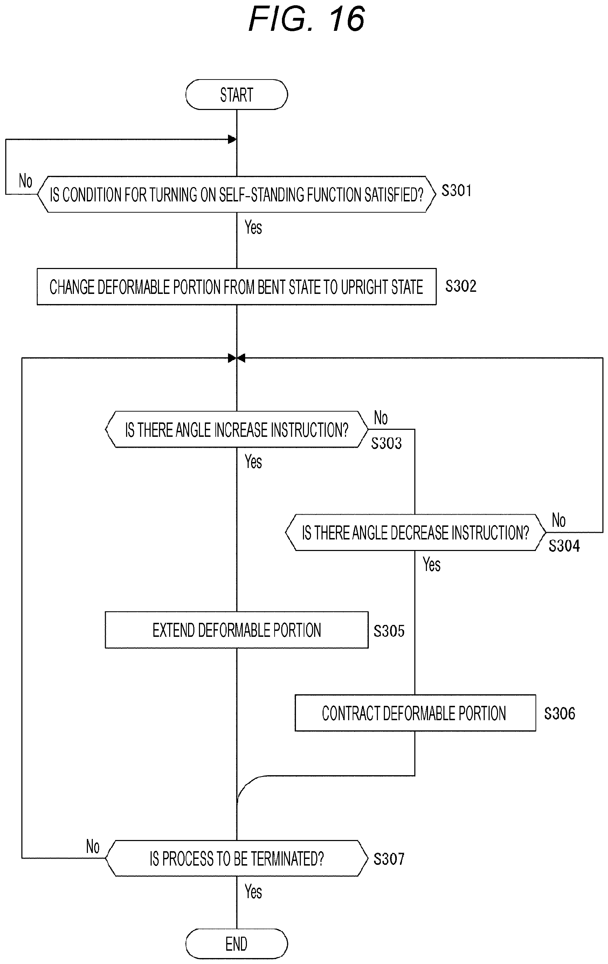

Fig. 16 is a flowchart illustrating a specific example of a processing procedure of the CPU 11 for implementing the self-standing function and the inclination angle adjustment function as described above.

Note that the process illustrated in this drawing starts in a state where the user grips the information processing apparatus 1 from the back surface as in Fig. 10 and the deformable portion 4 is bent to be locked to the hand of the user in response to the grip.

In Fig. 16, the CPU 11 waits until a condition for turning on the self-standing function in step S301. That is, it is determined whether or not the user intends to turn on the self-standing function from the state where the information processing apparatus 1 is gripped from the back surface.

In the present example, the condition for turning on the self-standing function is set as a condition that the grip pressure on the side surface of the information processing apparatus 1 becomes larger than the grip pressure on the front surface in a state where a specific application, such as a video viewing application, a video call application, or the like, is activated.

Note that the condition for turning on the self-standing function may be considered in various ways. For example, it is conceivable to set the condition as a condition that the information processing apparatus 1 is placed at an inclination angle of equal to or more than a predetermined angle in the state where a specific application, such as a video viewing application, a video call application, or the like, is activated.

Alternatively, the condition for turning on the self-standing function may be set to a condition that a predetermined operation input (which may be any of a physical manipulation element, GUI, and voice input) is made by the user.

Moreover, it is also possible to learn a waveform pattern of acceleration or angular velocity when the information processing apparatus 1 is placed at an inclination angle of equal to or more than a predetermined angle in the state of being gripped by the user, and determine whether or not the user desires to turn on the self-standing function depending on whether or not the learned waveform pattern matches.

In a case where it is determined in step S301 that the condition for turning on the self-standing function is satisfied, the CPU 11 proceeds to step S302 to perform processing of changing the deformable portion 4 from the bent state to the upright state. That is, the deformable portion 4 is controlled to be in a non-bent state.

In step S303 subsequent to step S302, the CPU 11 determines whether or not there is an angle increase instruction. That is, in the present example, it is determined whether or not the gesture of moving the hand upward described above is detected, and specifically, the CPU 11 determines whether or not the corresponding gesture is detected on the basis of the captured image of the inner camera described above in the imaging unit 21.

In a case where it is determined that there is no angle increase instruction, the CPU 11 proceeds to step S304 to determine whether or not there is an angle decrease instruction, that is, whether or not the gesture of moving the hand downward is detected in the present example.

In a case where it is determined that there is no angle decrease instruction, the CPU 11 returns to step S303. That is, a loop process of waiting for either the angle increase instruction or the angle decrease instruction is formed by the processing of steps S303 and S304.

In a case where it is determined in step S303 that there is the angle increase instruction, the CPU 11 proceeds to step S305 to perform processing of extending the deformable portion 4. With this arrangement, the inclination angle of the information processing apparatus 1 is increased by a predetermined angle in response to the angle increase instruction.

The CPU 11 advances the process to step S307 in response to the execution of the processing of step S305.

On the other hand, in a case where it is determined in step S304 that there is the angle decrease instruction, the CPU 11 proceeds to step S306 to perform processing of contracting the deformable portion 4. With this arrangement, the inclination angle of the information processing apparatus 1 is decreased by a predetermined angle in response to the angle decrease instruction.

The CPU 11 advances the process to step S307 in response to the execution of the processing of step S306.

In step S307, the CPU 11 determines whether or not the process is to be terminated, that is, whether or not a predetermined condition for terminating the process is satisfied. Examples of the condition for terminating the process include termination of the above-described specific application such as a video viewing application, a video call application, or the like, transition of the information processing apparatus 1 to the sleep state, and the like.

In a case where it is determined in step S307 that the process is not to be terminated, the CPU 11 returns to step S303. With this arrangement, the processing for receiving an instruction of angle increase or angle decrease and adjusting the inclination angle according to the instruction continues.

On the other hand, in a case where it is determined in step S307 that the process is to be terminated, the CPU 11 terminates the series of processing illustrated in Fig. 16.

Here, the inclination angle adjustment may be carried out as automatic adjustment without depending on an instruction input made by the user.

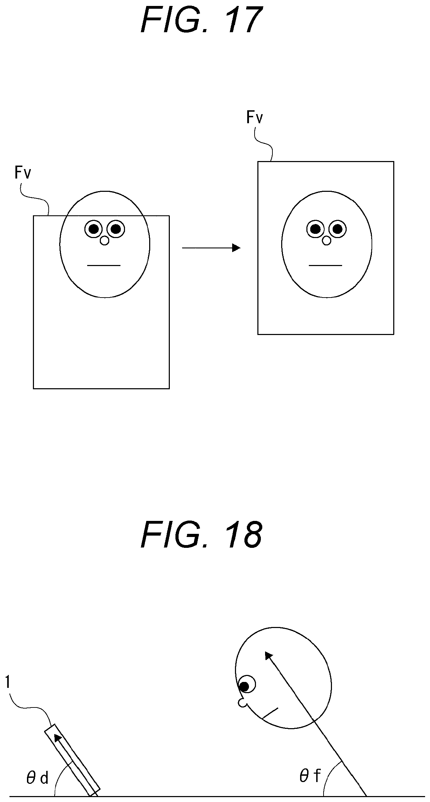

As an example, as exemplified in Fig. 17, the inclination angle may be adjusted such that the face of the user fits within an imaging field of view Fv of the inner camera.

Furthermore, at this time, it is also possible to adjust an inclination angle Θd of the information processing apparatus 1 such that an inclination angle θf of the face of the user matches the inclination angle Θd of the information processing apparatus 1, as exemplified in Fig. 18.

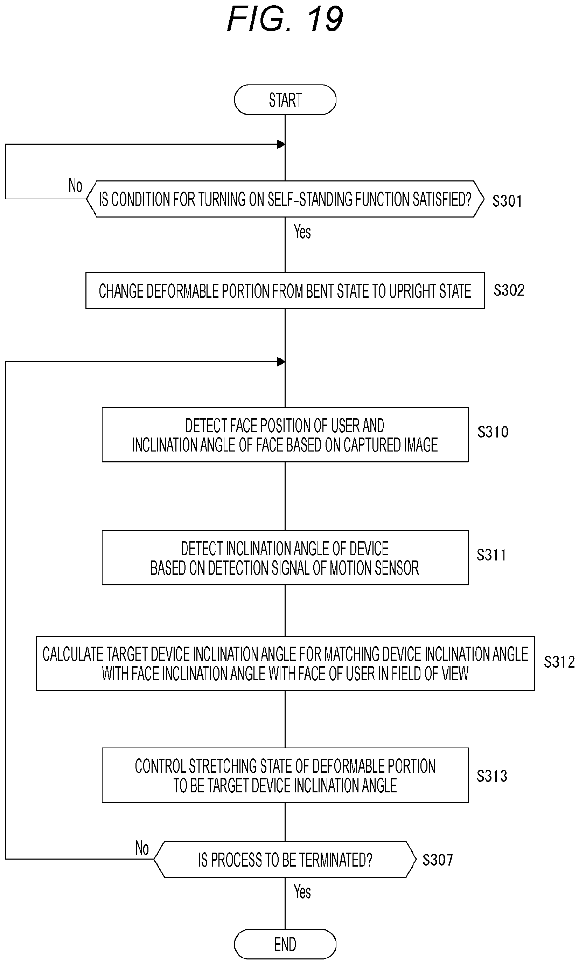

Fig. 19 is a flowchart illustrating a specific example of a processing procedure of the CPU 11 for implementing such inclination angle adjustment.

In this case, in response to setting the deformable portion 4 to the upright state in step S302 in response to the condition for turning on the self-standing function satisfied in step S301, the CPU 11 performs processing of detecting the face position of the user and the inclination angle θf of the face on the basis of the captured image in step S310. Specifically, image analysis is performed on the image captured by the inner camera in the imaging unit 21 to detect the face position of the user and the inclination angle θf.

In step S311 subsequent to step S310, the CPU 11 detects the inclination angle Θd of the information processing apparatus 1 on the basis of the detection signal of the motion sensor.

Then, in step S312 subsequent to step S311, the CPU 11 calculates a target device inclination angle for matching the device inclination angle with the face inclination angle with the face of the user in the field of view. That is, the target device inclination angle is calculated such that the entire image area of the face of the user is located in the image captured by the inner camera and the inclination angle Θd matches the inclination angle θf detected in step S310. For this calculation of the target device inclination angle, at least the information regarding the face position and the inclination angle θf detected in step S310 and the inclination angle θd detected in step S311 are used.

In step S313 subsequent to step S312, the CPU 11 controls the stretching state of the deformable portion 4 such that the inclination angle θd becomes the target device inclination angle.

In response to the processing execution in step S313, the CPU 11 executes the processing of the process termination determination of step S307, and returns to step S310 in a case where it is determined that the process is not to be terminated. With this arrangement, the processing for adjusting the inclination angle θd based on the face position of the user and the inclination angle θf described above continues until it is determined that the process is to be terminated.

In a case where it is determined in step S307 that the process is to be terminated, the CPU 11 terminates the series of processing illustrated in Fig. 19.

Here, the method of adjusting the inclination angle θd is not limited to the method exemplified above.

For example, it is conceivable to control the stretching state of the deformable portion 4 such that the changed inclination angle θd is maintained when the user manually moves the information processing apparatus 1 to change the inclination angle θd while a video viewing application or a video call application is running.

Alternatively, it is also conceivable to control the stretching state of the deformable portion 4 such that, when the user manually changes the length of the deformable portion 4, the changed length is maintained.

Such control may be performed on the basis of, for example, a detection signal of the external force detection sensor included in the sensor unit 33 illustrated in Fig. 7. Specifically, it is sufficient if, when a detection value of the external force detection sensor changes by equal to or more than a predetermined value, the tension of the wire of the deformable portion 4 is changed such that the detection value becomes equal to or lower than a predetermined value (e.g., zero).

### <4. Variations>

While the embodiment according to the present technology has been described above, the embodiment is not limited to the specific example described above, and configurations as various variations may be adopted.

For example, it is also possible to use the deformable portion 4 for various types of information notification.

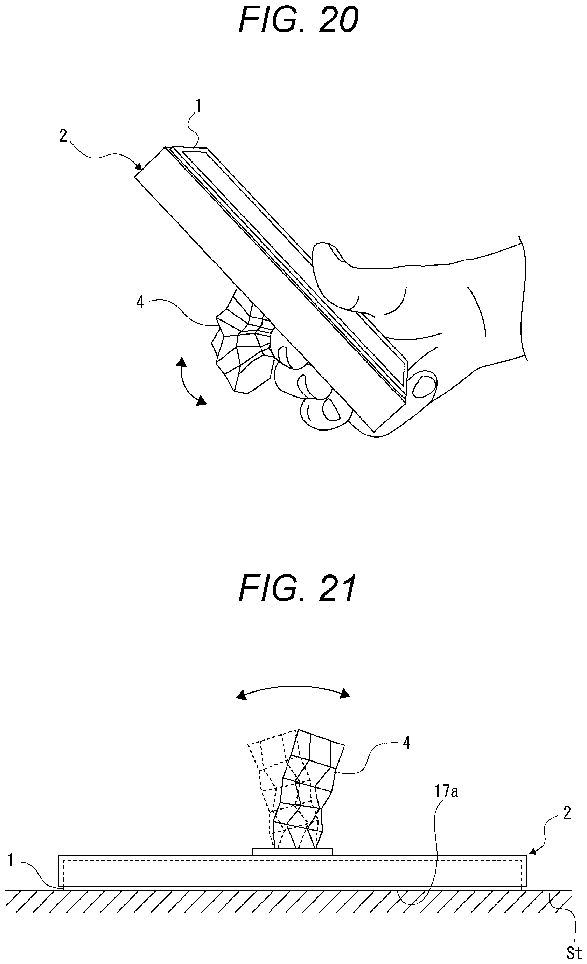

Specifically, as illustrated in Fig. 20, it is conceivable to adjust the bending force of the deformable portion 4 in the state where the user grips the information processing apparatus 1 from the back surface to perform an operation of tapping the hand of the user with the deformable portion 4 as a notification operation. Examples of the notification here include notification associated with an incoming call or mail reception, notification of various errors, and the like.

Alternatively, as illustrated in Fig. 21, it is conceivable to adjust the bending force of the deformable portion 4 in the state where the information processing apparatus 1 is laid down (placed with the display screen 17a facing downward) on the placement surface St to perform an operation of swinging the deformable portion 4 as a notification operation.

Furthermore, it is also conceivable to perform such an operation of swinging the deformable portion 4 under a predetermined condition, such as during music reproduction, to heal the user. At this time, it is also conceivable to adjust the swing cycle of the deformable portion 4 to the rhythm of the music or the like.

Furthermore, regarding the inclination angle adjustment of the information processing apparatus 1 described as the third exemplary method, it is also conceivable to perform the stretching control of the deformable portion 4 such that the balance improves when the information processing apparatus 1 supported by the deformable portion 4 is placed in an unbalanced state.

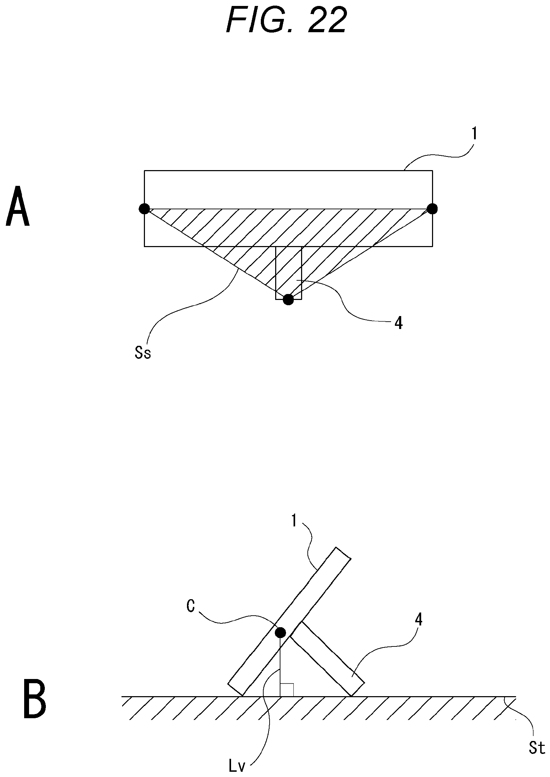

Fig. 22 is an explanatory diagram thereof, and Figs. 22A and 22B illustrate a support surface Ss of the information processing apparatus 1 in the state where the deformable portion 4 functions as a support portion and a perpendicular line Lv from a gravity center position C of the information processing apparatus 1, respectively.

It is sufficient if the stretching control of the deformable portion 4 is performed such that, when the balance is poor, that is, when the intersection of the perpendicular line Lv and the placement surface St is far from the center of the support surface Ss, the balance improves, that is, the intersection of the perpendicular line Lv and the placement surface St approaches the center of the support surface Ss.

Furthermore, while the exemplary case where the CPU 11 of the information processing apparatus 1 mainly controls the deformable portion 4 has been described in the descriptions above, it is also conceivable to adopt a configuration in which the control unit 31 in the cover device 2 controls the deformable portion 4 on the basis of signals from various sensors provided in the information processing apparatus 1, for example.

Alternatively, it is also conceivable to adopt a configuration in which a sensor required for controlling the deformable portion 4 is provided in the cover device 2.

Moreover, while the exemplary case where the deformable portion 4 is provided in the cover device 2 that covers the target object such as a smartphone has been described, the deformable portion 4 may be configured integrally with the smartphone.

Furthermore, while a portable electronic device, such as a smartphone, has been exemplified as an example of the "target object" according to the present technology in the descriptions above, the "target object" may be, for example, a non-electronic device, such as a book or a mirror. In a case where the target object is a book, a mirror, or the like, it is conceivable to set the control unit 31 in the cover device 2 as a control main body of the deformable portion 4. Furthermore, it is conceivable to provide the sensor required for controlling the deformable portion 4 in the cover device 2.

Furthermore, it is sufficient if the deformable portion 4 is at least either stretchable or deformable. It is possible to perform control as in the third exemplary method in a case of being stretchable, and is possible to perform control as in the first exemplary method or the second exemplary method in a case of being bendable.

### <5. Summary of embodiment>

As described above, the information processing apparatus (information processing apparatus 1) according to the embodiment includes the control unit (CPU 11) that obtains recognition information related to use of the target object to which the deformable portion that is at least either stretchable or bendable is attached, and that performs deformation control of the deformable portion on the basis of the obtained recognition information.

In the configuration described above, the deformable portion may be stretchable and deformable, or may be bendable and deformable. In a case where the deformable portion is made stretchable and deformable, the deformable portion in an extended state may function as a support portion that supports the target object to maintain the target object in a self-standing state, and since the length may change according to the stretching at the time of functioning as a support portion in this manner, an inclination angle of the target object in the self-standing state may be adjusted. Moreover, it becomes possible to be in a contracted state to cope with a non-used state of the target object, and to be unobtrusive when the target object is not used.

Furthermore, in a case where the deformable portion is made bendable and deformable, it may function as a locking portion with respect to a hand of a user or another object, and it becomes possible to assist the user not to drop the target object when the user grips the target object, or to allow the user to use the target object in a hands-free state by locking the target object to another object even if the user does not hold the target object in the hand.

Therefore, by performing the deformation control of the deformable portion on the basis of the recognition information related to the use of the target object as described above, it becomes possible to deform the deformable portion into an appropriate shape depending on usage conditions or the like of the target object, and to improve usability of the target object.

Furthermore, in the information processing apparatus according to the embodiment, the control unit obtains the recognition information on the basis of the detection signal of the sensor attached to the target object.

With this arrangement, it becomes possible to appropriately specify the usage conditions or the like of the target object on the basis of the detection signal regarding the event that has occurred in the target object.

Moreover, in the information processing apparatus according to the embodiment, the recognition information includes motion information of the target object.

The usage conditions or the like of the target object are reflected in the motion of the target object.

Therefore, according to the configuration described above, it becomes possible to appropriately specify the usage conditions or the like of the target object, and to improve the usability of the target object by deforming the deformable portion into an appropriate shape according to the usage conditions or the like of the target object.

Furthermore, in the information processing apparatus according to the embodiment, the deformable portion is stretchable and bendable, and the control unit switches and executes the deformation control related to stretching of the deformable portion and the deformation control related to bending of the deformable portion on the basis of the motion information (see step S105 and subsequent steps in Fig. 11).

With this arrangement, it becomes possible to appropriately switch and execute the deformation control related to stretching and the deformation control related to bending depending on the usage conditions of the target object specified by the motion information, such as, on the basis of the motion information, assisting the target object not to fall by performing the deformation control related to bending to lock the deformable portion to the hand of the user or the like in a case where a drop sign of the target object is recognized, or deforming the deformable portion to the housed state by performing the deformation control related to stretching in a case where a placement sign of the target object is recognized, for example.

Furthermore, in the information processing apparatus according to the embodiment, the deformable portion is bendable, and the control unit performs control to increase a bending force of the deformable portion in a case where a drop sign of the target object is recognized on the basis of the motion information in a state where the deformable portion is bent (see Fig. 11).

With this arrangement, it becomes possible to increase the bending force in the case where the drop sign is recognized in the state where the deformable portion is bent and locked to the hand of the user who grips the target object, for example.

Therefore, it becomes possible to suppress a drop of the target object from the hand of the user who grips the target object.

Moreover, in the information processing apparatus according to the embodiment, the recognition information includes information related to gripping of the target object by the user.

For example, it becomes possible to specify the usage conditions of the target object from the recognition information related to the gripping of the target object such as a difference in the usage conditions of the target object between a case where the user grips the target object from the back surface and a case where the user grips the target object from the front surface.

Therefore, it becomes possible to deform the deformable portion into an appropriate shape on the basis of the usage conditions of the target object specified from the recognition information related to the gripping of the target object, and to improve the usability of the target object.

Furthermore, in the information processing apparatus according to the embodiment, the target object has a plurality of surfaces, and the recognition information includes information regarding a grip pressure on each of the surfaces of the target object.

With this arrangement, it becomes possible to recognize how the user grips the target object.

Therefore, it becomes possible to deform the deformable portion into an appropriate shape on the basis of the usage conditions (e.g., situation where the user grips the target object from the back surface, situation where the gripped target object is likely to be placed, etc.) of the target object specified from the grip state of the target object by the user, and to improve the usability of the target object.

Furthermore, in the information processing apparatus according to the embodiment, the deformable portion is stretchable and bendable, and the control unit switches and executes the deformation control related to stretching of the deformable portion and the deformation control related to bending of the deformable portion on the basis of the information regarding the grip pressure on each of the surfaces of the target object (see Fig. 11) .

For example, it may be estimated that the user grips the target object from the back surface in a case where the grip pressure on the back surface of the target object is larger than the grip pressure on the side surface, and may be estimated that the target object is about to be placed in a case where the grip pressure on the side surface of the target object is larger than the grip pressure on the back surface.

Therefore, by switching and executing the deformation control related to stretching of the deformable portion and the deformation control related to bending of the deformable portion on the basis of the grip pressure on each of the surfaces of the target object as described above, it becomes possible to improve the usability of the target object such as assisting the target object not to fall by bending the deformable portion in a case where it is specified that the user grips the target object from the back surface or deforming the deformable portion into the housed state not to obstruct the placement in a case where it is specified that the target object is about to be placed, for example.

Moreover, in the information processing apparatus according to the embodiment, the recognition information includes recognition information related to a gesture of the hand of the user.

The recognition information related to the gesture of the hand of the user may be referred to as recognition information related to an operation instruction performed on the target object by the user, and may be referred to as one aspect of the recognition information related to the use of the target object from the viewpoint of what kind of operation instruction is received from the user for the target object.

According to the configuration described above, it becomes possible to deform the deformable portion into an appropriate shape on the basis of the operation instruction from the user specified from the gesture of the hand of the user, and to improve the usability of the target object.

Furthermore, in the information processing apparatus according to the embodiment, the deformable portion is stretchable, and the control unit performs the deformation control related to stretching of the deformable portion on the basis of the recognition information related to the gesture.

With this arrangement, it becomes possible to change a length of the deformable portion depending on the gesture of the hand of the user to cope with the case where the deformable portion functions as the support portion of the target object for self-standing of the target object.

Therefore, it becomes possible to adjust the inclination angle of the target object according to the gesture of the hand of the user.

Furthermore, in the information processing apparatus according to the embodiment, the recognition information includes recognition information related to a posture of the target object.

With the recognition information related to the posture of the target object, it becomes possible to specify usage conditions of the target object from the viewpoint of the posture in which the target object is used.

Therefore, it becomes possible to deform the deformable portion into an appropriate shape on the basis of the usage conditions of the target object specified from the posture of the target object, and to improve the usability of the target object.

Moreover, in the information processing apparatus according to the embodiment, the deformable portion is stretchable, and the control unit performs the deformation control related to stretching of the deformable portion on the basis of the recognition information related to the inclination angle of the target object.

It becomes possible to specify the inclination angle at which the user desires to maintain the target object depending on the recognition information related to the inclination angle of the target object.

Therefore, by performing the deformation control related to stretching of the deformable portion on the basis of the recognition information related to the inclination angle as described above, it becomes possible to adjust the length of the deformable portion such that the inclination angle desired to be maintained by the user is achieved, and to improve the usability of the target object.

Furthermore, in the information processing apparatus according to the embodiment, the deformable portion is stretchable, and the control unit performs, on the basis of an image captured by the camera attached to the target object, the deformation control related to stretching of the deformable portion such that the face of the user fits within the imaging field of view of the camera.

With this arrangement, it becomes possible to adjust the inclination angle of the target object such that the face of the user fits within the imaging field of view of the camera to cope with the case where the deformable portion functions as the support portion that supports the target object for self-standing of the target object.

Therefore, to cope with a case where the camera is provided on the same surface as a visual information presentation surface of the target object, it becomes possible to adjust the inclination angle of the target object such that the user is enabled to easily view the visual information, and to improve the usability of the target object.

Furthermore, in the information processing apparatus according to the embodiment, the control unit performs the deformation control related to stretching of the deformable portion on the basis of the inclination angle of the face of the user detected from the captured image and the information regarding the inclination angle of the target object obtained as the recognition information such that the inclination angle of the face matches the inclination angle of the target object.

With this arrangement, to cope with the case where the camera is provided on the same surface as the visual information presentation surface of the target object, it becomes possible to adjust the inclination angle of the target object such that the user is enabled to more easily view the visual information, and to further improve the usability of the target object.

Furthermore, the information processing method according to the embodiment is an information processing method that causes the information processing apparatus to obtain recognition information related to use of the target object to which the deformable portion that is at least either stretchable or bendable is attached, and to perform deformation control of the deformable portion on the basis of the obtained recognition information.

According to such an information processing method, it becomes possible to achieve the information processing apparatus as the embodiment described above.

Here, as the embodiment, a program may be considered, for example, for causing a CPU, a digital signal processor (DSP), or the like, or a device including the CPU, the DSP, or the like, to execute the processing by the information processing apparatus 1 described with reference to Figs. 11, 13, 14, 16, 19, and the like.

That is, the program according to the embodiment is a program readable by a computer device, and is a program that causes the computer device to implement the function of obtaining recognition information related to use of the target object to which the deformable portion that is at least either stretchable or bendable is attached and performing deformation control of the deformable portion on the basis of the obtained recognition information.

Furthermore, the recording medium according to the embodiment is a recording medium that records a program readable by a computer device, and is a recording medium that causes the computer device to implement the function of obtaining the recognition information related to use of the target object to which the deformable portion that is at least either stretchable or bendable is attached and performing the deformation control of the deformable portion on the basis of the obtained recognition information.

According to such a program and a recording medium, it becomes possible to implement the function as the information processing apparatus 1 described above.

The program described above may be recorded in advance in an HDD as a recording medium built in a device such as a computer device, a ROM in a microcomputer including a CPU, or the like. Alternatively, the program may be temporarily or permanently stored (recorded) in a removable recording medium such as a flexible disk, a compact disc read only memory (CD-ROM), a magneto optical (MO) disk, a digital versatile disc (DVD), a Blu-ray disc (registered trademark), a magnetic disk, a semiconductor memory, or a memory card. Such a removable recording medium may be provided as what is called package software.

Furthermore, such a program may be installed from the removable recording medium into a personal computer or the like, or may be downloaded from a download site via a network such as a local area network (LAN) or the Internet.

Furthermore, the program as described above is suitable for providing the information processing apparatus 1 according to the embodiment in a wide range. For example, by downloading the program to a personal computer, a portable information processing apparatus, a mobile phone, a game device, a video device, a personal digital assistant (PDA), or the like, the personal computer or the like may be caused to function as a device that achieves the processing as the information processing apparatus 1 according to the present disclosure.

Note that the effects described in the present specification are merely illustrative and are not limited, and other effects may be exerted.

### <6. Present technology>

Note that the present technology may also adopt the following configurations.
(1) An information processing apparatus including:
   a control unit that obtains recognition information related to use of a target object to which a deformable portion that is at least either stretchable or bendable is attached, and that performs deformation control of the deformable portion on the basis of the obtained recognition information.
(2) The information processing apparatus according to (1) described above, in which
   the control unit obtains the recognition information on the basis of a detection signal of a sensor attached to the target object.
(3) The information processing apparatus according to (1) or (2) described above, in which
   the recognition information includes motion information of the target object.
(4) The information processing apparatus according to (3) described above, in which
   the deformable portion is configured to be stretchable and bendable, and
   the control unit switches and executes the deformation control related to stretching of the deformable portion and the deformation control related to bending of the deformable portion on the basis of the motion information.
(5) The information processing apparatus according to (3) or (4) described above, in which
   the deformable portion is configured to be bendable, and
   the control unit performs control to increase a bending force of the deformable portion in a case where a drop sign of the target object is recognized on the basis of the motion information in a state where the deformable portion is bent.
(6) The information processing apparatus according to any one of (1) to (5) described above, in which
   the recognition information includes information related to gripping of the target object by a user.
(7) The information processing apparatus according to (6) described above, in which
   the target object has a plurality of surfaces, and
   the recognition information includes information regarding a grip pressure on each of the surfaces of the target object.
(8) The information processing apparatus according to (7) described above, in which
   the deformable portion is configured to be stretchable and bendable, and
   the control unit switches and executes the deformation control related to stretching of the deformable portion and the deformation control related to bending of the deformable portion on the basis of the information regarding the grip pressure on each of the surfaces of the target object.
(9) The information processing apparatus according to any one of (1) to (8) described above, in which
   the recognition information includes recognition information related to a gesture of a hand of a user.
(10) The information processing apparatus according to (9) described above, in which
   the deformable portion is configured to be stretchable, and
   the control unit performs the deformation control related to stretching of the deformable portion on the basis of the recognition information related to the gesture.
(11) The information processing apparatus according any one of (1) to (10) described above, in which
   the recognition information includes recognition information related to a posture of the target object.
(12) The information processing apparatus according to (11) described above, in which
   the deformable portion is configured to be stretchable, and
   the control unit performs the deformation control related to stretching of the deformable portion on the basis of recognition information related to an inclination angle of the target object.
(13) The information processing apparatus according to any one of (1) to (12) described above, in which
   the deformable portion is configured to be stretchable, and
   the control unit performs, on the basis of an image captured by a camera attached to the target object, the deformation control related to stretching of the deformable portion such that a face of a user fits within an imaging field of view of the camera.
(14) The information processing apparatus according to (13) described above, in which
   the control unit performs the deformation control related to the stretching of the deformable portion on the basis of an inclination angle of the face of the user detected from the captured image and information regarding an inclination angle of the target object obtained as the recognition information such that the inclination angle of the face matches the inclination angle of the target object.
(15) An information processing method causing an information processing apparatus to perform:
   obtaining recognition information related to use of a target object to which a deformable portion that is at least either stretchable or bendable is attached, and performing deformation control of the deformable portion on the basis of the obtained recognition information.
(16) A recording medium that records a program readable by a computer device, the program causing the computer device to implement a function including:
   obtaining recognition information related to use of a target object to which a deformable portion that is at least either stretchable or bendable is attached, and performing deformation control of the deformable portion on the basis of the obtained recognition information.

### REFERENCE SIGNS LIST

- 1: Information processing apparatus
- 2: Cover device
- 3: Case portion
- 4: Deformable portion
- 11: CPU
- 12: ROM
- 13: RAM
- 14: Nonvolatile memory unit
- 15: Input/output interface
- 16: Input unit
- 17: Display unit
- 17a: Display screen
- 18: Audio output unit
- 19: Storage unit
- 20: Communication unit
- 21: Imaging unit
- 22: Sensor unit
- 23: Bus
- 30: Actuator
- 31: Control unit
- 32: Communication unit
- 33: Sensor unit
- St: Placement surface
- Os: Support body
- Ss: Support surface
- C: Gravity center position
- Lv: Perpendicular line

## Claims

1. An information processing apparatus comprising:
a control unit that obtains recognition information related to use of a target object to which a deformable portion that is at least either stretchable or bendable is attached, and that performs deformation control of the deformable portion on a basis of the obtained recognition information.

2. The information processing apparatus according to claim 1, wherein
the control unit obtains the recognition information on a basis of a detection signal of a sensor attached to the target object.

3. The information processing apparatus according to claim 1, wherein
the recognition information includes motion information of the target object.

4. The information processing apparatus according to claim 3, wherein
the deformable portion is configured to be stretchable and bendable, and
the control unit switches and executes the deformation control related to stretching of the deformable portion and the deformation control related to bending of the deformable portion on a basis of the motion information.

5. The information processing apparatus according to claim 3, wherein
the deformable portion is configured to be bendable, and
the control unit performs control to increase a bending force of the deformable portion in a case where a drop sign of the target object is recognized on a basis of the motion information in a state where the deformable portion is bent.

6. The information processing apparatus according to claim 1, wherein
the recognition information includes information related to gripping of the target object by a user.

7. The information processing apparatus according to claim 6, wherein
the target object has a plurality of surfaces, and
the recognition information includes information regarding a grip pressure on each of the surfaces of the target object.

8. The information processing apparatus according to claim 7, wherein
the deformable portion is configured to be stretchable and bendable, and
the control unit switches and executes the deformation control related to stretching of the deformable portion and the deformation control related to bending of the deformable portion on a basis of the information regarding the grip pressure on each of the surfaces of the target object.

9. The information processing apparatus according to claim 1, wherein
the recognition information includes recognition information related to a gesture of a hand of a user.

10. The information processing apparatus according to claim 9, wherein
the deformable portion is configured to be stretchable, and
the control unit performs the deformation control related to stretching of the deformable portion on a basis of the recognition information related to the gesture.

11. The information processing apparatus according to claim 1, wherein
the recognition information includes recognition information related to a posture of the target object.

12. The information processing apparatus according to claim 11, wherein
the deformable portion is configured to be stretchable, and
the control unit performs the deformation control related to stretching of the deformable portion on a basis of recognition information related to an inclination angle of the target object.

13. The information processing apparatus according to claim 1, wherein
the deformable portion is configured to be stretchable, and
the control unit performs, on a basis of an image captured by a camera attached to the target object, the deformation control related to stretching of the deformable portion such that a face of a user fits within an imaging field of view of the camera.

14. The information processing apparatus according to claim 13, wherein
the control unit performs the deformation control related to the stretching of the deformable portion on a basis of an inclination angle of the face of the user detected from the captured image and information regarding an inclination angle of the target object obtained as the recognition information such that the inclination angle of the face matches the inclination angle of the target object.

15. An information processing method causing an information processing apparatus to perform:
obtaining recognition information related to use of a target object to which a deformable portion that is at least either stretchable or bendable is attached, and performing deformation control of the deformable portion on a basis of the obtained recognition information.

16. A recording medium that records a program readable by a computer device, the program causing the computer device to implement a function comprising:
obtaining recognition information related to use of a target object to which a deformable portion that is at least either stretchable or bendable is attached, and performing deformation control of the deformable portion on a basis of the obtained recognition information.
